# EUROPEAN PATENT APPLICATION

(11) **EP 3 340 135 A1**
(43) Date of publication of application: **27.06.2018**
(21) Application number: 17157840.4
(22) Date of filing: 24.02.2017
(51) Int. Cl.: G06Q 10/06, G06F 9/44

(54) **APPARATUS FOR PROVIDING PROGRAM**

(30) Priority: 21.12.2016 KR 20160175994
(71) Applicant: LSIS Co., Ltd., Gyeonggi-do 14119 (KR)
(72) Inventor: YOON, Yeo-Chang, 14118 Gyeonggi-do (KR); LEE, Seok-Chan, 14118 Gyeonggi-do (KR); LEE, Seung-Ju, 14118 Gyeonggi-do (KR)
(74) Representative: Zacco Sweden AB

(57) **Abstract**

An apparatus for providing a power management program includes: at least one original module providing unit (161) configured to provide an original source code associated with power management function; a modified module providing unit (162) configured to provide a modified source code, wherein the modified source code is modified differently from an original source code provided from the at least one original module providing unit; and a source code combining unit (163) configured to generate a program by combining the original source code by the at least one original module providing unit with the modified source code by the modified module providing unit.

## Description

### BACKGROUND

### 1. Technical Field

The present disclosure relates to an apparatus for providing a program for operating a monitoring and control system.

### 2. Description of the Related Art

A monitoring and control system is a system for monitoring and controlling industrial process, facility process and equipment process. For example, the monitoring and control system includes a SCADA system (Supervisory Control And Data Acquisition system) and an EMS (Energy Management System), etc.

The SCADA system is for organizing work processes by target devices placed in an area of interest by monitoring and controlling the work processes.

The EMS is for efficiently managing energy by checking the energy use of an area of interest.

Such a monitoring and control system collects measurement data from measurement devices, converts the measurement data into engineering data, and monitors/controls target devices disposed in the area of interest based on the engineering data.

Typically, the monitoring and control system includes an apparatus for providing a program composed of combinations of source codes for performing various functions for monitoring and controlling a target device.

Such an apparatus for providing a program may include a source code for performing various functions in ordinary situations (hereinafter referred to as "original source code") for ease of manufacturing. Further, the apparatus for providing a program needs to be modified to include a modified source code different from the original source code in certain situations such as the installation environment of the monitoring and control system and user's requirements.

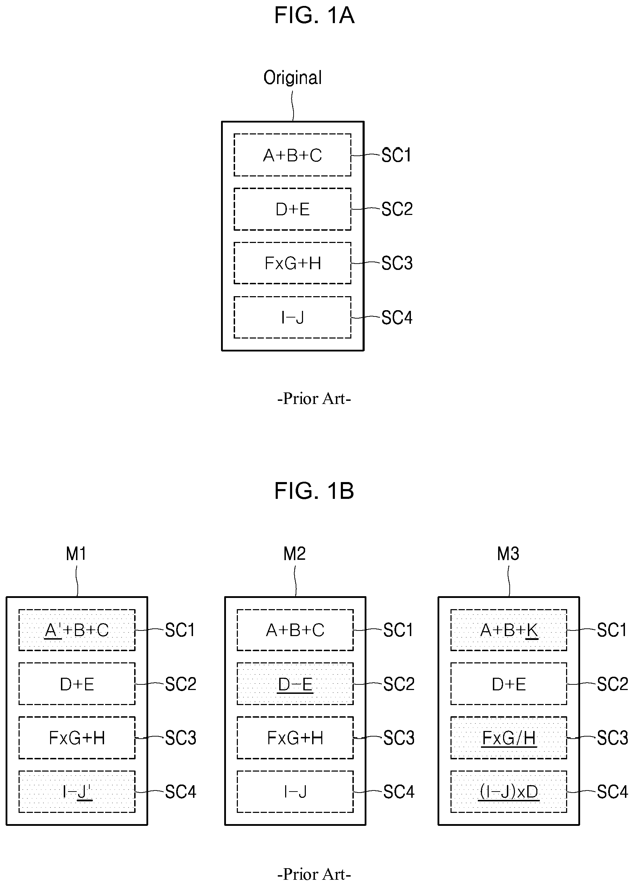

FIG. 1A is a diagram showing an apparatus for providing a program including an original source code. FIG. 1B is a diagram showing an apparatus for providing a program including modified source codes according to the prior art.

In the drawings, alphabetic symbols A to K in FIGS. 1A and 1B denote variables, and mathematical symbols +, x, -, /, () denote instructions. It is to be understood that the source codes shown in FIGS. 1A and 1B are not the actual source codes of the apparatus for providing a program provided in the monitoring and control system but simplified form of source codes.

As shown in FIGS. 1A and 1B, the apparatus for providing a program includes a plurality of modules SC1, SC2, SC3 and SC4 that provide a plurality of source codes for performing various functions.

As shown in FIG. 1A, the plurality of modules SC1, SC2, SC3 SC4 is prepared to provide original source code at the time of manufacturing the apparatus for providing a program. For example, each of the plurality of modules SC1, SC2, SC3 and SC4 may contain an original source code composed of at least one combination of various variables A to K and various instructions +, x, -, /, ().

According to the prior art shown in FIG. 1B, the plurality of modules SC1, SC2, SC3 and SC4 provide modified source codes M1, M2 and M3 different from the original source code for specific situations. Each of the modified source codes M1, M2 and M3 is prepared by modifying the variables or instructions of the original source code held in at least one of the plurality of modules SC1, SC2, SC3 and SC4 so that they cope with the respective specific situations.

Specifically, the first modified source code M1 corresponding to the first specific situation is prepared by replacing the variable A of the original source code held in the first module SC1 with the variable A' and replacing the variable J of the original source code held in the fourth module SC4 with the variable J'

The second modified source code M2 corresponding to the second specific situation is prepared by replacing the instruction "+" of the original source code held in the second module SC2 with the instruction "-".

The third modified source code M3 corresponding to the third specific situation is prepared by replacing the variable C of the original source code held in the first module SC1 with the variable K, replacing the instruction "+" of the original source code held in the third module SC3 with the instruction "/", and adding the instruction "x" and the variable "D" to the original source code held in the fourth module SC4.

As such, it is practically impossible for the apparatus for providing a program to be completely compatible with all of the installation environments of the monitoring and control system and all user's requirements.

Accordingly, the apparatus for providing a program is prepared to include original source codes associated with ordinary situations at the time of manufacturing. In addition, the apparatus for providing a program employed in the monitoring and control system includes modified source codes made by modifying at least some original source codes according to specific situations so as to be compatible with the installation environment of the monitoring and control system and the user's requirements. That is, according to a typical apparatus for providing a program, there is a trade-off between compatibility and consistency, and consistency may be compromised in order to increase compatibility.

If the apparatus for providing a program loses the consistency, the supplier of the apparatus needs to keep the original source codes together with the modified source codes for maintenance of the apparatus. In doing so, as the number of clients for the original source codes increases and accordingly the number of modified source codes increases, the burden on the supplier for managing the modified source codes is increased.

In addition, if the derivation process of the modified source codes is not specified, it is difficult to intuitively know whether the difference between the modified source codes and the original source codes is made for the compatibility of the installation environment and the user's requirements or is resulted from a mistake by the supplier.

Therefore, there is a problem that there is a limit in reducing the cost of maintenance of the apparatus for providing a program.

As described above, according to the existing apparatus for providing a program, there is a trade-off between improving the compatibility for the installation environment and the user's requirements and maintaining consistency for easy maintenance.

### SUMMARY

It is an object of the present disclosure to provide an apparatus for providing a program that can keep consistency while improving compatibility.

Objects of the present disclosure are not limited to the above-described objects and other objects and advantages can be appreciated by those skilled in the art from the following descriptions. Further, it will be easily appreciated that the objects and advantages of the present disclosure can be practiced by means recited in the appended claims and a combination thereof.

In accordance with one aspect of the present disclosure, an apparatus for providing a power management program includes: at least one original module providing unit configured to provide an original source code associated with power management function; a modified module providing unit configured to provide a modified source code, wherein the modified source code is modified differently from an original source code provided from the at least one original module providing unit; and a source code combining unit configured to generate a program by combining the original source code by the at least one original module providing unit with the modified source code by the modified module providing unit.

The original source codes may be composed of combinations including at least one of at least one variable, at least one instruction, at least one executable file and a library call list.

The modified source code may be modified to be different from the original source code based on at least one of the client request and the client information, and the modified module providing unit may store the client request and the client information along with the modified source code.

The apparatus for providing a program described above includes a plurality of original module providing unit for providing original source codes, and a modified module providing unit for providing modified source codes different from the original source code.

The apparatus can provide a modified source code different from the original source code based on at least one of a client request and client information while keeping the original source code.

Therefore, the compatibility can be improved without compromising the consistency.

Accordingly, the apparatus can find more applications, the maintenance can be easier, and the manufacturing process can become simpler.

In addition, since the modified source code can be provided separately, the difference between the original source code and the modified source code can be seen intuitively, allow for easy maintenance of the apparatus.

### BRIEF DESCRIPTION OF DRAWINGS

FIG. 1A is a diagram showing an apparatus for providing a program including an original source code;
FIG. 1B is a diagram showing an apparatus for providing a program including modified source codes according to the prior art;
FIG. 2 is a diagram of a monitoring and control system according to an exemplary embodiment of the present disclosure;
FIG. 3 is a diagram of an apparatus for providing a program shown in FIG. 2; and
FIG. 4 is a diagram showing examples of an apparatus for providing a program according to an exemplary embodiment of the present disclosure.

### DETAILED DESCRIPTION

The above objects, features and advantages will become apparent from the detailed description with reference to the accompanying drawings. Embodiments are described in sufficient detail to enable those skilled in the art in the art to easily practice the technical idea of the present disclosure. Detailed descriptions of well-known functions or configurations may be omitted in order not to unnecessarily obscure the gist of the present disclosure. Hereinafter, embodiments of the present disclosure will be described in detail with reference to the accompanying drawings. Throughout the drawings, like reference numerals refer to like elements.

Hereinafter, a monitoring and control system and an apparatus for providing a program provided therein according to an exemplary embodiment of the present disclosure will be described in detail with reference to the accompanying drawings.

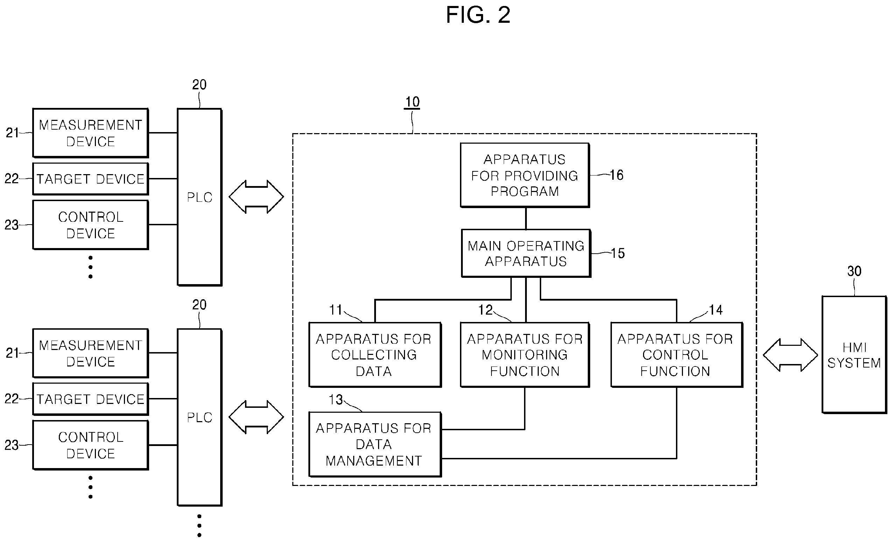

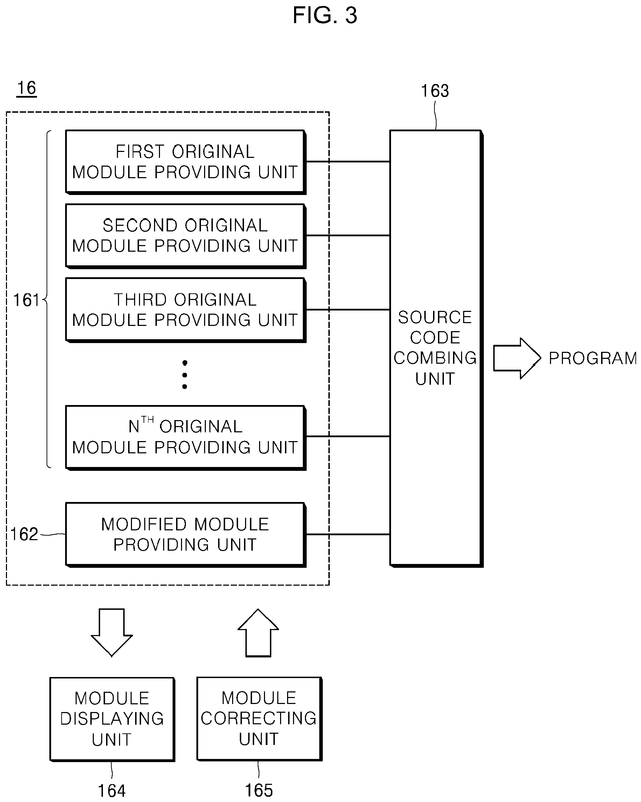

FIG. 2 is a diagram of a monitoring and control system according to an exemplary embodiment of the present disclosure. FIG. 3 is a diagram of the apparatus for providing a program shown in FIG. 2.

As shown in FIG. 2, the monitoring and control system 10 according to the exemplary embodiment of the present disclosure collects measurement data by measurement devices 21 via at least one PLC 20, and converts the measurement data into engineering data to manage it. Then, the engineering data is provided to a user via a HMI system 30.

The at least one PLC 20 is a system for substantially controlling the processes and may be connected to the measurement devices 21 for generating measurement data, target devices 22 each associated with the respective processes, and control devices 23 for controlling driving of each of the devices, etc.

The monitoring and control system 10 includes an apparatus for collecting data 11 that collects measurement data, an apparatus for monitoring function 12 that converts the collected measurement data into engineering data, an apparatus for managing data 13 that holds engineering data, and an apparatus for control function 14 that controls processes based on the engineering data. In addition, the monitoring and control system further includes a main operating apparatus 15 that collectively manages the apparatus for collecting data 11, the apparatus for monitoring function 12 and the apparatus for control function 14, and an apparatus for providing a program 16 that provides source codes associated with a variety of functions.

As shown in FIG. 3, the apparatus for providing a program 16 includes a plurality of original module providing units 161, a modified module providing unit 162, a source code combining unit 163, a module displaying unit 164, and a module correcting unit 165.

The plurality of original module providing units 161 provides original source codes for the power management function. The original source codes are associated with ordinary situations. In other words, the plurality of original module providing units 161 of the apparatus for providing a program 16 provides original source codes for performing various functions in the ordinary situations. The original source codes may be composed of combinations including at least one of at least one variable, at least one instruction, at least one executable file and a library call list.

The modified module providing unit 162 provides a modified source code different from the original source code provided from at least one of the plurality of original module providing units 161. The modified source code is generated by modifying the original source code according to at least one of the installation environment of the monitoring and control system 10, client requests and client information.

For example, if the original source code is not compatible due to a particular installation environment of the monitoring and control system 10, a modified source code can be prepared by modifying the original source code in accordance with at least one of the client request and the client information. Such a modified source code is to perform various functions according to the original source code even in a special installation environment of the monitoring and control system 10.

The source code combining unit 163 combines the source codes provided from the plurality of original module providing unit 161 and the modified module providing unit 162 to create a program. Specifically, the source code combining unit 163 may combine the modified source code with the rest of the original source codes provided from the plurality of original module providing units 161 except the original source code matched with the modified source code provided from the modified module providing unit 162. For example, the source code combining unit 163 may include a compiler function for converting a program that is composed of an original source code written in a predetermined programming language and a modified source code into a target code.

The module displaying unit 164 displays a source code provided from at least one of the plurality of original module providing unit 161 and the modified module providing unit 162 that is selected upon the user's request or displays a program generated by the source code combining unit 163.

The module correcting unit 165 is to add, delete or correct a modified source code held in the modified module providing unit 162 if the situation changes into a special situation.

As described above, the apparatus for providing a program 16 according to an exemplary embodiment of the present disclosure includes the plurality of original module providing units 161, so that the original source codes can be kept. In addition, the apparatus further includes the modified module providing unit 162 holding a modified source code prepared by modifying the original source code according to a specific situation, so that it can be easily adapted for various situations. Thus, the compatibility can be improved without compromising the consistency. That is, the apparatus 16 can find more applications, the maintenance can be easier, and the manufacturing process can become simpler.

In addition, since the modified source code may be provided separately from the original source code, the difference between the original source code and the modified source code can be seen intuitively, allow for easy maintenance of the apparatus 16.

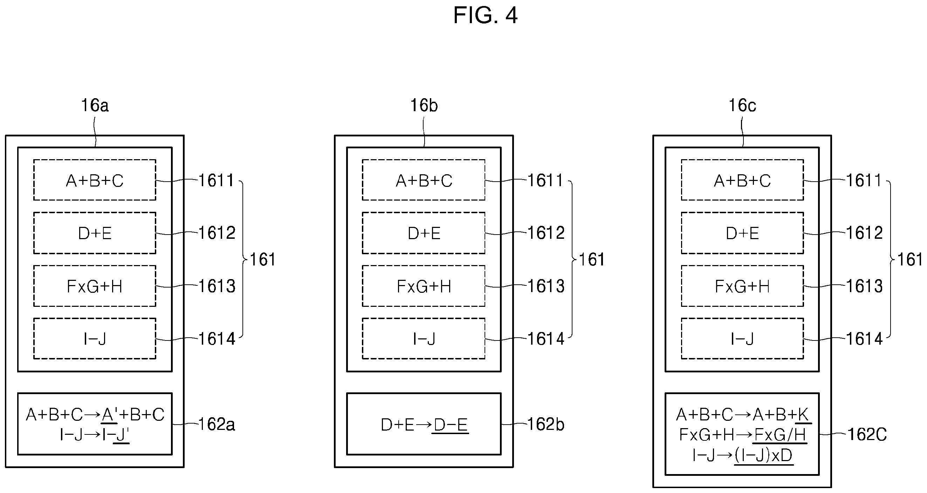

Next, easier modification of the apparatus for providing a program 16 according to an exemplary embodiment of the present disclosure will be described with reference to FIG. 4.

FIG. 4 is a diagram showing examples of an apparatus for providing a program according to an exemplary embodiment of the present disclosure.

As shown in FIG. 4, the examples 16a, 16b and 16c of the apparatus for providing a program according to an exemplary embodiment of the present disclosure include a plurality of original module providing units 161 for providing the original source code shown in FIG. 1A, and modified module providing units and 162a, 162b and 162c for providing modified source codes associated with first to third specific situations, respectively.

That is, the first example 16a includes the plurality of original module providing units 161 and a modified module providing unit 162a associated with the first specific situation. The modified module providing unit 162a associated with the first specific situation includes a modified source code A'+ B + C that matches the original source code A + B + C held in the first original module providing unit 1611, and a modified source code I - J' that matches the original source code source I - J held in the fourth original module providing unit 1614.

Likewise, the second example 16b includes the plurality of original module providing units 161 and a modified module providing unit 162a associated with the second specific situation. The modified module providing unit 162b associated with the second specific situation holds a modified source code D - E that matches the original source code D + E held in the second original module providing unit 1612.

In addition, the third example 16c includes the plurality of original module providing units 161 and a modified module providing unit 162c associated with the third specific situation. The modified module providing unit 162c associated with the third specific situation holds a modified source code A'+ B + K that matches the original source code A + B + C held in the first original module providing unit 1611, a modified source code F x G / H that matches the original source code source F x G + H held in the third original source module providing unit 1613, and a modified source code (I - J) x D that matches the original source code source I - J held in the fourth original module providing unit 1614.

As described above, according to an exemplary embodiment of the present disclosure, the original source codes may be provided by the plurality of original module providing units 161, and the modified source codes associated with the respective specific situations are provided by the modified module providing units 162a, 162b, 162c separately from the original source codes. Therefore, the consistency, the compatibility, the easiness of manufacturing, and easiness of maintenance of the apparatus for providing a program 16 can be improved.

The present disclosure described above may be variously substituted, altered, and modified by those skilled in the art to which the present invention pertains without departing from the scope and sprit of the present disclosure. Therefore, the present disclosure is not limited to the above-mentioned exemplary embodiments and the accompanying drawings.

## Claims

1. An apparatus for providing a power management program which operates a monitoring and control system, the apparatus comprising:
at least one original module providing unit (161) configured to provide an original source code associated with power management function;
a modified module providing unit (162) configured to provide a modified source code, wherein the modified source code is modified differently from an original source code provided from the at least one original module providing unit; and
a source code combining unit (163) configured to generate a program by combining the original source code by the at least one original module providing unit with the modified source code by the modified module providing unit,
wherein the modified source code is generated by modifying the original source code based on a client request and/or client information.

2. The apparatus of claim 1, wherein the modified module providing unit (162) stores the client request and the client information along with the modified source code.

3. The apparatus of claim 2, wherein the modified module providing unit (162) inquiries a modification history of the modified source code by using the client information.

4. The apparatus of claim 1, wherein the original source code comprises at least one of at least one variable, at least one instruction, at least one executable file and a library call list.

5. The apparatus of claim 1, wherein the original module providing unit (161) is implemented as a medium for storing the original source code, and wherein the modified module providing unit (162) is implemented as a medium for storing the modified source code.

## Amended claims

### Amended claims in accordance with Rule 137(2) EPC.

1. An apparatus arranged to provide a power management program for performing one or more power management functions of a monitoring and control system, the apparatus comprising:
a plurality of original module providing units (161), each original module providing unit implemented as a medium for storing original source code and configured to provide original source code associated with a respective power management function;
a modified module providing unit (162) implemented as a medium for storing a modified source code and configured to provide the modified source code, wherein the modified source code is generated by modifying original source code based on at least one of a monitoring and control system request and monitoring and control system information and is modified from original source code provided from the plurality of original module providing units; and
a source code combining unit (163) configured to generate the power management program by combining original source code provided by the plurality of original module providing units with the modified source code provided by the modified module providing unit, and including a compiler function configured to convert the power management program for execution in the monitoring and control system.

2. The apparatus of claim 1, wherein the modified module providing unit (162) is configured to store the monitoring and control system request and the monitoring and control system information along with the modified source code.

3. The apparatus of claim 2, wherein the modified module providing unit (162) is configured to inquirie a modification history of the modified source code by using the monitoring and control system information.

4. The apparatus of claim 1, wherein original source code comprises at least one of at least one variable, at least one instruction, at least one executable file and a library call list.
